# EUROPEAN PATENT SPECIFICATION

(11) **EP 1 602 687 B1**
(45) Date of publication and mention of the grant of the patent: **04.01.2012**
(21) Application number: 04716771.3
(22) Date of filing: 03.03.2004
(51) Int. Cl.: C08L 29/10, C08K 5/00, C08F 8/12, C08J 5/22, H01M 8/02, H01M 8/10, C08J 3/11

(54) **LIQUID FLUOROPOLYMER COMPOSITION, PROCESS FOR PRODUCING ORGANOSOL, FILM, AND FUEL CELL**
FLÜSSIGE FLUORPOLYMERZUSAMMENSETZUNG, VERFAHREN ZUR HERSTELLUNG VON ORGANOSOL, FILM UND BRENNSTOFFZELLE
COMPOSITION DE FLUOROPOLYMERE LIQUIDE, PROCEDE DE PRODUCTION D'ORGANOSOL, D'UNE COUCHE MINCE ET PILE A COMBUSTIBLE

(30) Priority: 03.03.2003 JP 2003056184
(43) Date of publication of application: 07.12.2005
(73) Proprietor: DAIKIN INDUSTRIES, LTD., Osaka-shi, Osaka 530-8323 (JP)
(72) Inventor: TATEMOTO, Masayoshi, c/o Daikin Industries, Ltd., Settsu-shi, Osaka 5668585 (JP); INO, Tadashi, c/o Daikin Industries, Ltd., Settsu-shi, Osaka 5668585 (JP); ARASE, Takuya, c/o Daikin Industries, Ltd., Settsu-shi, Osaka 5668585 (JP); SAKAKURA, Atsushi, c/o Daikin Industries, Ltd., Settsu-shi, Osaka 5668585 (JP)
(74) Representative: HOFFMANN EITLE
(86) International application number: PCT/JP2004/002609
(87) International publication number: WO 2004/078842

(56) References cited:
- EP-A- 0 030 104
- EP-A- 0 079 218
- EP-A- 1 283 225
- GB-A- 942 956
- JP-A- 11 040 162
- JP-A- 11 246 669
- JP-A- 54 107 949
- JP-A- 56 072 022
- JP-A- 57 070 144
- JP-A- 58 500 567
- JP-A- 62 141 032

## Description

### TECHNICAL FIELD

The present invention relates to a fluoropolymer liquid composition.

### BACKGROUND ART

Fluoropolymers having sulfonic acid groups and/or carboxyl groups which may be in the form of salts (hereinafter sometimes referred to as "acid/acid salt groups") have an established use as materials of ion exchange membranes for use in electrolytic soda processes, water electrolysis processes and so forth and, in recent years, they have attracted attention as materials for the manufacture of various sensor protecting membranes, gas dehumidifying device membranes and, in particular, proton conductive membranes and membrane/electrode assemblies [MEA] for solid polymer fuel cells, among others.

In these fields of application, the use has been contemplated of such acid/acid salt group-containing fluoropolymers in the form of films/membranes molded by cast film formation or by impregnation of porous supports therewith, for instance, and it is desirable that thin and compact films/membranes or large-area films/membranes be obtained.

As the method of obtaining membranous moldings of a sulfonic acid group-based acid/acid salt group-containing fluoropolymer, there is.available a method which comprises forming membranous moldings from a fluoropolymer powder obtained by coagulation of an aqueous dispersion of an - SO₂F group-containing fluoropolymer, followed by drying or from pellets further obtained from this powder and then hydrolyzing the membranous moldings as they are to thereby convert the -SO₂F group to the sulfonic acid group.

However, this method has a problem in that it cannot give thin films/membranes since it is unfeasible for cast film formation or impregnation of porous supports and in that it is also difficult to obtain compact films/membranes.

As a method for solving this problem, there is known a method which comprises preparing an organosol by fluoropolymer transfer from an aqueous dispersion of an - SO₂F group-containing fluoropolymer to an organic solvent, forming membranous moldings using this organosol and hydrolyzing the membranous moldings as they are to thereby convert the -SO₂F group to the sulfonic acid group or a salt thereof (cf. e.g. Japanese Kokai Publication S57-115424 and Japanese Kokai Publication S57-115425).

However, this method has a problem in that the organosol is poor in film/membrane-forming property, and the document cited above has no description about the use of a film-forming auxiliary.

There is known dispersion which comprises a sulfonic acid salt group-containing, highly fluorinated ion exchange polymer particles of which about 25% by mass have a particle diameter of 2 to 30 nm (cf. e.g. Japanese Kohyo Publication 2001-504872). However, the dispersion described in this document tends to become highly viscous and has a problem in that the productivity in manufacturing films/membranes by cast film formation is low.

A method of obtaining membranous moldings of a sulfonic acid salt group-containing fluoropolymer is known which comprises subjecting a solution or aqueous dispersion of a fluoropolymer obtained by polymerizing a fluorine-containing monomer having such sulfonic acid salt group to ultrafiltration, adding such a cationophilic substance as polyethylene glycol as a film-forming auxiliary and forming the resulting composition into films/membranes by cast film formation (cf. e.g. Japanese Kokai Publication 2001-226425).

In cases where the cationophilic substance needs to be removed from the membranous moldings after formation thereof, this method is disadvantageous in that it is necessary to heat the moldings to the thermal decomposition temperature of the cationophilic substance which is a high molecular substance.

EP-A-0 079 218 discloses a method for repairing perfluorocarbon copolymer cation exchange membranes by partially solvating a quantity of a perfluorocarbon copolymer having a desired pendant cation-exchange functional group, using a solvating dispersion medium. The composition is applied to areas of the membrane to be repaired and the dispersion medium is then removed. No film forming auxiliary is disclosed in this document.

EP-A-1 283 225 relates to a process for producing a fluorinated ionomer, comprising copolymerizing, in the presence of a polymerization initiator, (i) a compound of the formula (M)_{1/L}-OSO₂-CFY-(CF₂)ₘ-O-(CFX-CF₂-O)ₙ-CF=CF₂ wherein M is H or a metal with a valence of L (L is 1, 2 or 3), X is F, Cl or CF₃, Y is halogen, m is 1-5, and n is 0-5, (ii) tetrafluoroethylene and (iii) at least one third monomer selected from hexafluoropropylene, chlorotrifluoroethylene, vinylidene fluoride, CF₂=CFORf (wherein Rf is C₁₋₅-perfluoroalkyl) and ethylene. Further provided is a method for purifying and concentrating a fluorinated ionomer, comprising ultrafiltration or dialysis of a fluorinated ionomer solution or dispersion, and a method for forming a film of the fluorinated ionomer. A phosphoric acid ester as a film-forming auxiliary is not described.

### SUMMARY OF THE INVENTION

In view of the foregoing, it is an object of the present invention to provide a fluoropolymer liquid composition which is excellent in film/membrane-forming properties and can give acid/acid salt group-containing, i.e. sulfonic acid group-and/or carboxyl group-containing, fluoropolymer films/membranes.

The invention provides a composition, which is a fluoropolymer liquid dispersion composition comprising
i) fluoropolymer fine particles, at least 25 wt.-% of which are substantially spherical, and which comprise a fluoropolymer comprising an acid/acid salt fluorovinyl ether unit of the formula (I): 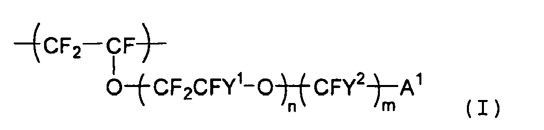 wherein
   Y¹ each individually is halogen or perfluoroalkyl,
   n is an integer of 0-3,
   Y² each individually is halogen,
   m is an integer of 1-5; and
   A¹ is -SO₂X¹ or -COOZ¹,
   wherein
   X¹ is -OH, - ONR¹R²R³R⁴, -NR⁵R⁶ or -OM¹_{1/L}, with R¹, R², R³ and R⁴ each individually being H or C₁₋₄-alkyl, and R⁵ and R⁶ each individually being H, an alkali metal, alkyl or a sulfonyl-containing group; and
   Z¹ is H, NR⁷R⁸R⁹R¹⁰ or -M²_{1/L}, with R⁷, R⁸, R⁹ and R¹⁰ each individually being H or C₁₋₄-alkyl, and M¹ and M² each being a metal having a valence of L and being selected from the groups 1, 2, 4, 8, 11, 12 and 13 of the periodic table; and
ii) as a film-forming auxiliary, a phosphoric acid ester which is compatible with water and has a boiling point of more than 100°C to 300°C.

Also, the invention provides a method of producing the present fluoropolymer liquid dispersion composition, which comprises incorporating a film-forming auxiliary into a dispersion comprising the fluoropolymer fine particle dispersed in an aqueous dispersion medium, followed by water evaporation.

Even further, the invention provides a film/membrane obtainable by cast film formation using the present fluoropolymer liquid dispersion composition, or by impregnating a porous support with the present fluoropolymer liquid dispersion composition, followed by removal of the liquid medium.

### Still further, the invention provides

- an active substance-immobilized material, which is obtainable by applying a liquid composition comprising an active substance and the present fluoropolymer liquid dispersion composition a substrate;
- an electrolyte membrane comprising the active substance-immobilized material;
- a membrane/electrode assembly comprising the electrolyte membrane; and
- a solid polymer electrolyte fuel cell comprising any of the film/membrane, the active substance-immobilized material, the electrolyte membrane and the membrane/electrode assembly of the present invention.

Preferred embodiments of the present invention are as defined in the appended dependent claims.

### BRIEF DESCRIPTION OF THE DRAWINGS

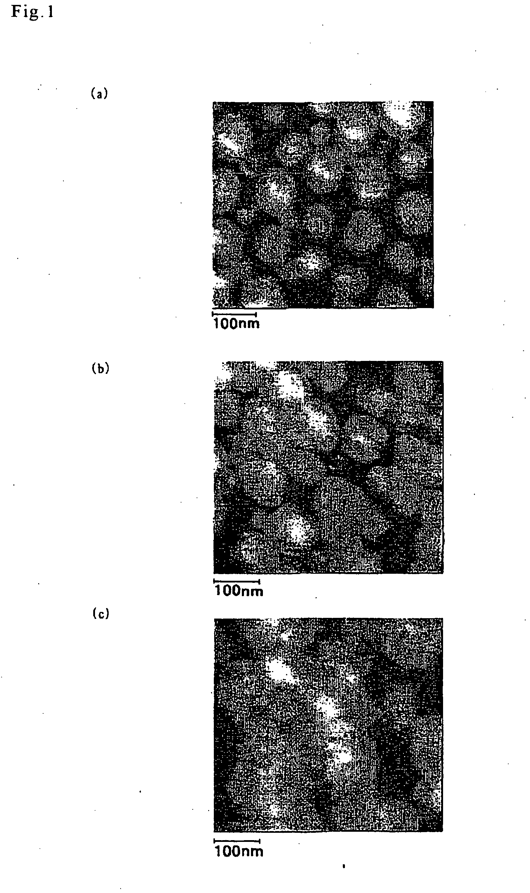

Fig. 1 (a) is a photograph of the coat film derived from the emulsion polymer dispersion obtained in Example 1 (4) as taken with an atomic force microscope. Fig. 1 (b) is a photograph of the coat film derived from the fluoropolymer aqueous dispersion obtained in Example 1 (4) as taken with an atomic force microscope, and Fig. 1 (c) is a photograph of the coat film derived from the fluoropolymer dispersion composition obtained in Example 1 (4) as taken with an atomic force microscope.

### DETAILED DISCLOSURE OF THE INVENTION

In the following, the present invention is described in detail.

The fluoropolymer liquid composition of the invention comprises a fluoropolymer and a film-forming auxiliary.

The fluoropolymer liquid composition of the invention is judiciously used in manufacturing films/membranes by cast film formation, namely by applying the fluoropolymer liquid composition of the invention to a substrate or base material, followed by drying the same at ordinary temperature and/or with heating and, if necessary further followed by immersion in water, or in manufacturing films/membranes by impregnating porous supports with that composition.

The fluoropolymer liquid composition of the invention generally occurs as a liquid composition and is a fluoropolymer dispersion composition comprising fluoropolymer fine particles of a fluoropolymer as dispersed in a dispersion medium comprising an aqueous dispersion medium, an organic dispersion medium. The "fluoropolymer liquid composition" so referred to herein includes, within the meaning thereof, not only the above-mentioned liquid composition but also a composition resulting from partial gelation of the above-mentioned composition.

The fluoropolymer mentioned above comprises acid/acid salt fluorovinyl ether units represented by the above general formula (I). The "acid/acid salt fluorovinyl ether units" constitute a part of the molecular structure of the fluoropolymer and are moieties derived from the fluorovinyl-ether derivative or acid salt fluorovinyl-ether derivative to be described later herein. The "acid/acid salt fluorovinyl ether units" are acid group-containing acid fluorovinyl ether units or acid salt group-containing acid salt fluorovinyl ether units. The "acid group" so referred to herein includes, within the meaning thereof, a sulfonic acid group, a group represented by -SO₂X¹ in which X¹ is -NR⁵R⁶, among the groups represented by A¹ in the above general formula (I), and a carboxyl group, and the "acid salt group" includes, within the meaning thereof, a sulfonic acid group in the form of a salt and a carboxyl group in the form of a salt. The above-mentioned acid salt group may be in an ionized form depending on the pH, among others, of the fluoropolymer liquid composition.

The above-mentioned acid group is preferably a sulfonic acid group, and the above-mentioned acid salt group is preferably a sulfonic acid group in the form of an alkali metal salt or an alkaline earth metal salt.

The acid/acid salt fluorovinyl ether units may be derived from one single monomer or two or more monomers.

The fluoropolymer may also be one in each molecule of which acid fluorovinyl ether units and acid salt fluorovinyl ether units coexist.

The above-mentioned fluoropolymer may also comprise a combination of a fluoropolymer comprising acid fluorovinyl ether units and a fluoropolymer comprising acid salt fluorovinyl ether units and, in the case of combined use, each of the fluoropolymer fine particles, which are to be mentioned later herein, may also be one in which a fluoropolymer comprising acid fluorovinyl ether units and a fluoropolymer comprising acid salt fluorovinyl ether units coexist.

As regards the above-mentioned acid/acid salt fluorovinyl ether units, n in the general formula (I) represents an integer of 0 to 3. The integer n is preferably 0 or 1, more preferably 0. The symbol m in the general formula (I) represents an integer of 1 to 5. The integer m is preferably 2.

Y¹ in the general formula (I) represents a halogen atom or a perfluoroalkyl group, and n atoms/groups of Y¹ may be the same or different. Y² in the general formula (I) represents a halogen atom, and m atoms of Y² may be the same or different. The halogen atom represented by Y¹ is not particularly restricted but may be a fluorine, chlorine, bromine or iodine atom; preferably it is a fluorine or chlorine atom. The perfluoroalkyl group is not particularly restricted but includes, among others, trifluoromethyl and pentafluoroethyl. As the halogen atom Y², there may be mentioned the same ones as the halogen atoms represented by Y¹. Referring to the above general formula (I), the above Y¹ is preferably a trifluoromethyl group, and the above Y² is preferably a fluorine atom.

In the above general formula (I), A¹ represents -SO₂X¹ or -COOZ¹. X¹ represents -OH, -ONR¹R²R³R⁴, -NR⁵R⁶ or -OM¹_{1/L}, and R¹, R², R³ and R⁴ may be the same or different and each represents a hydrogen atom or an alkyl group containing 1 to 4 carbon atoms. The alkyl group containing 1 to 4 carbon atoms is not particularly restricted but may be a methyl, ethyl, propyl or butyl group. R⁵ and R⁶ are the same or different and each represents a hydrogen atom, an alkali metal, an alkyl group or a sulfonyl-containing group. The alkali metal represented by R⁵ and/or R⁶ is not particularly restricted but may be, for example, Li, Na, K or Cs. The alkyl group represented by R⁵ and/or R⁶ is not particularly restricted but may be, for example, an alkyl group containing 1 to 4 carbon atoms. The alkyl group represented by R⁵ and/or R⁶ may be substituted by a halogen atom or atoms. The sulfonyl-containing group is a sulfonyl-containing, fluorine-containing alkyl group, for example a fluorine-containing alkylsulfonyl group, which may have a substituent at the terminal thereof. As the fluorine-containing alkylsulfonyl group, there may be mentioned -SO₂R_{f}¹Q (in which R_{f}¹ represents a fluorine-containing alkylene group and Q represents an organic group). The organic group is, for example,-SO₂F and, when the group X¹ is - NR⁵R⁶, -SO₂X¹ represented by A¹ in the general formula (I) may be such an unlimited chain as -SO₂ (NR⁵SO₂R_{f}¹SO₂)ₖNR⁵SO₂- (k representing an integer of not smaller than 1).

Z¹ represents a hydrogen atom, NR⁷R⁸R⁹R¹⁰ or -M²1_{/L}, and R⁷, R⁸, R⁹ and R¹⁰ may be the same or different and each represents a hydrogen atom or an alkyl group containing 1 to 4 carbon atoms. The alkyl group containing 1 to 4 carbon atoms as represented by R⁷, R⁸, R⁹ and/or R¹⁰ is not particularly restricted but includes the same ones as the alkyl groups containing 1 to 4 carbon atoms as represented by R¹, R², R³ and/or R⁴. M¹ and M² each represents a metal whose valence is L, and said metal whose valance is L is a metal belonging to the group 1, 2, 4, 8, 11, 12 or 13 of the periodic table. The metal whose valence is L is not particularly restricted but includes, for example, Li, Na, K and Cs as the metal of group 1 of the periodic table, Mg and Ca as the metal of group 2 of the periodic table, Al as the metal of group 4 of the periodic table, Fe as the metal of group 8 of the periodic table, Cu and Ag as the metal of group 11 of the periodic table, Zn as the metal of group 12 of the period table, and Zr as the metal of group 13 of the periodic table. Preferably, the above-mentioned group A¹ is -SO₂X¹.

Preferred as the acid/acid salt fluorovinyl ether units in the fluoropolymer are those in which, in the general formula (I), Y¹ is a trifluoromethyl group, Y² is a fluorine atom, n is 0 or 1 and m is 2. More preferred are those in which, in the general formula (I), Y¹ is a trifluoromethyl group, Y² is a fluorine atom, n is 0 and m is 2.

The fluoropolymer is preferably a binary or multinary copolymer comprising the acid/acid salt fluorovinyl ether units and ethylenic monomer-derived ethylenic monomer units.

The ethylenic monomer has a vinyl group whose hydrogen atoms may optionally be substituted either partly or wholly by a fluorine atom or atoms. The "ethylenic monomer" so referred to herein does not include those fluorovinyl-ether derivatives or acid salt fluorovinyl-ether derivatives which are to be mentioned later herein.

As the ethylenic monomer, there may be mentioned, for example, haloethylenic monomers represented by the general formula:

CF₂=CF-R_{f}²

(wherein R_{f}² represents a fluorine atom, a chlorine atom, - R_{f}³ or -OR_{f}³; R_{f}³ represents a straight or branched fluoroalkyl group containing 1 to 9 carbon atoms, which may optionally contain an ether oxygen atom or atoms), and hydrogen-containing fluoroethylenic monomers represented by the general formula:

CHY³=CFY⁴

(wherein Y³ represents a hydrogen atom or a fluorine atom, Y⁴ represents a hydrogen atom, a fluorine atom, a chlorine atom, -R_{f}⁴ or -OR_{f}⁴; R_{f}⁴ represents a straight or branched fluoroalkyl group containing 1 to 9 carbon atoms, which may optionally contain an ether oxygen atom or atoms).

The ethylenic monomer may also be a copolymerizable monomer other than the above-mentioned haloethylenic monomer or hydrogen-containing fluoro-ethylenic monomer. The other copolymerizable monomer is not particularly restricted provided that it can provide the fluoropolymer with one or more of various functions; thus, it can be appropriately selected from among various copolymerizable monomers so as to answer the intended purpose, for example the control of the rate of polymerization, the control of the polymer composition, the control of the mechanical properties, such as elastic modulus, or the introduction of crosslinking sites. As such monomers, there may be mentioned monomers having two unsaturated bonds, for example perfluoro-divinyl ether, and cyano group-containing monomers. The content of the ethylenic monomer units derived from the other copolymerizable monomer in fluoropolymer is preferably within the range within which the fundamental performance characteristics of that polymer will not be impaired.

The ethylenic monomer units may be derived from one single or two or more ethylenic monomer species.

The ethylenic monomer preferably comprises at least one monomer selected from the group consisting of CF₂=CF₂, CH₂=CF₂, CF₂=CFCl, CF₂=CFH, CH₂=CFH, CF₂=CFCF₃, and fluorovinyl ethers represented by CF₂=CF-O-R_{f}⁵ (in which R_{f}⁵ represents a fluoroalkyl group containing 1 to 9 carbon atoms or a fluoro-polyether group containing 1 to 9 carbon atoms). R_{f}⁵ in the fluorovinyl ether is preferably a perfluoroalkyl group containing 1 to 3 carbon atoms.

The above-mentioned ethylenic monomer is preferably a perhalo-ethylenic monomer, in particular perfluoro-ethylenic monomer, and more preferably is CF₂=CF₂.

The content of the acid/acid salt fluorovinyl ether units in the fluoropolymer is preferably 10 to 20 mole percent. When it is lower than 10 mole percent, the proton transport and other performance characteristics of the film/membrane obtained from the resulting fluoropolymer liquid composition may be deteriorated in some instances and, when it exceeds 20 mole percent, the mechanical strength of the film/membrane may become insufficient in certain cases. The above-mentioned "content of the acid/acid salt fluorovinyl ether units" is the ratio of the number of moles of the monomer or monomers from which the acid/acid salt fluorovinyl ether units are derived relative to the number of moles of the monomers from which all monomer units in the fluoropolymer molecule are derived. The "all monomer units" so referred to above include all monomer-derived units from the viewpoint of the molecular structure of the fluoropolymer. Therefore, the "monomers from which all monomer units are derived" correspond to the whole amount of the monomers constituting the fluoropolymer. The above-mentioned acid/acid salt fluorovinyl ether unit content is the value obtained by infrared spectrometric analysis [IR] or by NMR spectrometry in molten state at 300°C.

The fluoropolymer preferably amounts to 1 to 60% by mass of the fluoropolymer liquid composition. When the amount is smaller than 1% by mass, each single application of the fluoropolymer liquid composition in manufacturing film/membranes therefrom will give only a little film/membrane thickness, so that a plurality of applications will often be required to attain the desired film/membrane thickness. When it exceeds 60% by mass, the fluoropolymer liquid composition tends to gelate, hence it may become difficult to obtain uniform films/membranes. A more preferred lower limit is 5% by mass, and a more preferred upper limit is 15% by mass.

The fluoropolymer liquid composition according to the invention comprises a film-forming auxiliary as well as the above-mentioned fluoropolymer.

The film-forming auxiliary is a phosphoric acid ester which is compatible with water. The term "water" in the phrase "compatible with water" may be any liquid that is generally recognized as "water" in the field to which the present invention relates. Thus, for example, it may be "water" in a mixture with a water-soluble organic solvent, or deionized water, for instance. Pure water is preferred, however. The film-forming auxiliary may be one completely miscible with water at any mixing ratio upon mixing with water or one at least partly compatible with water.

The phrase "compatible with water" as used herein means that the auxiliary shows solubility, in water, of not lower than 1% by mass.

The film-forming auxiliary has a boiling point exceeding 100°C but not higher than 300°C. When the boiling point is 100°C or lower, it is generally equal to or lower than the boiling point of water, so that, in preparing the fluoropolymer liquid composition according to the invention by the organosol producing method (to be described later herein) which comprises incorporating the film-forming auxiliary into fluoropolymer aqueous dispersion comprising the fluoropolymer fine particles (to be described later herein) comprising the fluoropolymer as dispersed in an aqueous dispersion medium, it becomes impossible to remove the aqueous dispersion medium alone while the film-forming auxiliary is retained. When the boiling point is higher than 300°C, it is difficult to remove the film-forming auxiliary in cases where it is necessary to remove the film-forming auxiliary from the film/membrane formed using the resulting liquid composition. A preferred lower limit to the boiling point of the film-forming auxiliary is 150°C, and a preferred upper limit is 250°C.

The film-forming auxiliary is an organic compound which occurs as a liquid at ordinary temperature of about 20°C. Preferred are those having the ability to swell or partly dissolve the surface of the fluoropolymer fine particles.

The above-mentioned phosphoric acid esters are not particularly restricted but include, among others, phosphoric triesters derived from phosphoric acid and alcohols containing 1 to 5 carbon atoms, for example trimethyl phosphate and triethyl phosphate.

The film-forming auxiliary may comprise one single species or two or more species.

Among the phosphoric acid esters, phosphoric acid triesters are preferred, and triethyl phosphate is most preferred.

Preferably, the fluoropolymer liquid composition according to the invention further comprises a lower alcohol as well as the fluoropolymer and film-forming auxiliary.

The lower alcohol can be used in adjusting the surface tension of the fluoropolymer liquid composition.

The lower alcohol so referred to herein is a monoalcohol containing not more than 5 carbon atoms. The monoalcohol containing not more than 5 carbon atoms is not particularly restricted but includes, among others, straight or branched alkanols containing 1 to 5 carbon atoms, which may optionally be substituted by a fluorine atom or atoms. The alkanols preferably contain 1 to 3 carbon atoms. As such alkanols, there may be mentioned, for example, methanol, ethanol, propanol, isopropanol, and tetrafluoropropanol species such as 2,2,3,3-tetrafluoropropanol.

The lower alkanols may be used singly or two or more of them may be used in combination.

The fluoropolymer liquid composition according to the invention is a fluoropolymer dispersion composition comprising fluoropolymer fine particles comprising a fluoropolymer, and a film-forming auxiliary. The "fluoropolymer dispersion composition" so referred to herein also includes, within the meaning thereof, those dispersions resulting from dispersion of the above-mentioned fluoropolymer fine particles as the dispersoid in a dispersion medium comprising an aqueous dispersion medium and an organic dispersion medium, among others, in which the fluoropolymer fine particles have been partly dissolved. In cases where the fluoropolymer liquid composition according to the invention further comprises the above-mentioned lower alcohol, the fluoropolymer dispersion composition comprises the lower alcohol in the dispersion medium.

Since the fluoropolymer liquid composition according to the invention occurs as the fluoropolymer dispersion composition mentioned above and contains the film-forming auxiliary mentioned above, it is expected that, in the step of film/membrane molding, the film-forming auxiliary adsorbed on the surface of the fluoropolymer fine particles will swell or partially dissolve the particles, thereby making the fluoropolymer fine particles compatible and easy to fuse with one another.

While the interaction between the film-forming auxiliary and fluoropolymer fine particles cannot be observed by the eye when the composition is in liquid form before film/membrane molding, a photograph of the film/membrane obtained as taken by using an atomic force microscope [AFM] shows swelling of the polymer particles and fusion of the polymer particles, as shown in Fig. 1 (c). Thus, it is considered that the fluoropolymer fine particles are already in a swollen state when the composition is in liquid form. Further, it is considered that the film-forming auxiliary produces some effect on the fluoropolymer fine particles since the fluoropolymer liquid composition shows a wide range of change in viscosity upon a rise in temperature.

In the case of the prior fluoropolymer solution, not a dispersion, the film-forming auxiliary functions merely as a drying retardant in the step of film/membrane molding and, although it tends to reduce the occurrence of cracking due to stress relaxation as a result of surface drying retardation, there is a problem, namely, the polymer particles are not fused together, so that the cracking resistance of the resulting film/membrane surface is unsatisfactory and the film/membrane is poor in strength and other physical characteristics.

The fluoropolymer fine particles comprise not less than 25% by mass of those fluoropolymer fine particles which are substantially spherical.

The phrase "comprising not less than 25% by mass of those fluoropolymer fine particles which are substantially spherical" as used herein means that not less than 25% by mass of the fluoropolymer fine particles are spherical fluoropolymer fine particles.

The particle shape of the fluoropolymer fine particles can be judged by taking the aspect ratio as a measure.

The term "substantially spherical" as used herein means that the aspect ratio is not higher than 3. Generally, the shape comes nearer and nearer to spherical as the aspect ratio approaches 1. The aspect ratio of the fluoropolymer fine particles is preferably not higher than 3. A more preferred upper limit is 2, and a still more preferred upper limit is 1.5.

Generally, if polymer fine particles are anisotropic in particle shape, a dispersion of the polymer fine particles will tend to show a high viscosity and, if the polymer fine particle dispersion is high in viscosity, it will be unfavorably difficult to increase the polymer fine particles concentration in the dispersion.

When the above-mentioned fluoropolymer fine particles comprise not less than 25% by mass of those fluoropolymer fine particles which are substantially spherical, it is possible to lower the viscosity of the fluoropolymer dispersion composition as compared with the case of a composition containing no substantially spherical fluoropolymer fine particles and, further, it is possible to increase the solid matter concentration of the fluoropolymer dispersion composition and, therefore, it is possible to realize high levels of productivity in film/membrane manufacture by cast film formation or other film/membrane manufacturing techniques. On the other hand, spherical particles tend to cause cracking in film/membrane manufacture by cast film formation or other film/membrane manufacturing techniques since they show only weak interparticle interactions. The present invention has made it possible to prevent cracking by using the above-mentioned film-forming auxiliary.

The fluoropolymer fine particles preferably comprise not less than 50% by mass of spherical fluoropolymer fine particles.

The fluoropolymer dispersion composition whose spherical fluoropolymer fine particle content is within the above-specified range can be readily obtained by preparing it from a dispersion obtained by emulsion polymerization. Even a dispersion composition whose spherical fluoropolymer fine particle content is 90% by mass or higher can be obtained from a dispersion obtained by emulsion polymerization. The above-mentioned fluoropolymer dispersion composition can also be prepared by adjusting a composition having a relatively high content of spherical fluoropolymer fine particles by incorporating therewith-fine particles not substantially spherical in shape among the fluoropolymer fine particles so that the dispersion composition may have the desired performance characteristics.

The mass proportion of the spherical fluoropolymer fine particles is the value obtained by converting the proportion of spherical fluorine-containing fine particles contained in an image of fluoropolymer fine particles as obtained by using a scanning or transmission microscope, an atomic force microscope to the mass of spherical fluoropolymer fine particles.

The fluoropolymer fine particles preferably have an average particle diameter of not smaller than 10 nm. When the diameter is smaller than 10 nm, the fluoropolymer dispersion composition may cover active sites and will fail to give good battery characteristics in some of the cases where the dispersion composition is used as an electrode material for solid polymer fuel cells.

When the average particle diameter is within the above range, an upper limit may be set at 300 nm, for instance, considering the stability of the fluoropolymer dispersion composition and the ease of preparation of the fluoropolymer precursor which is to be described later herein. Average particle diameters exceeding 300 nm, however, will not greatly influence the battery characteristics.

The fluoropolymer fine particles preferably have an average particle diameter of 10 to 300 nm. A more preferred lower limit to the average particle diameter is 30 nm, and a more preferred upper limit is 160 nm.

The above-mentioned aspect ratio and average particle diameter can be determined by observing the fluoropolymer fine particles using a scanning or transmission microscope, an atomic force microscope, measuring the major and minor axes of at least 20 fine particles on the image obtained and calculating the major-to-minor axis length ratio (major axis/minor axis) as the aspect ratio and the mean of the major and minor axis lengths as the average particle diameter to be further described later herein, respectively.

The above-mentioned fluoropolymer dispersion composition preferably comprises at least 25% by mass of those spherical fluorine-containing fine particles which have an average particle diameter of not smaller than 10 nm among the fluoropolymer fine particles.

More preferably, the fluoropolymer dispersion composition comprises at least 25% by mass of those spherical fluorine-containing fine particles which have an average particle diameter of 10 to 300 nm among the fluoropolymer fine particles.

Still more preferably, the fluoropolymer dispersion composition comprises at least 25% by mass of those spherical fluorine-containing fine particles which have an average particle diameter of 30 to 160 nm among the fluoropolymer fine particles.

The fluoropolymer liquid composition according to the invention is preferably a dispersion obtained by incorporating a film-forming auxiliary into fluoropolymer aqueous dispersion in which fluoropolymer fine particles are dispersed in an aqueous dispersion medium. Since the "dispersion obtained by incorporating a film-forming auxiliary" is obtained by incorporating a film-forming auxiliary into fluoropolymer aqueous dispersion comprising fluoropolymer fine particles dispersed in an aqueous dispersion medium, the aqueous dispersion medium in the above-mentioned fluoropolymer aqueous dispersion and the film-forming auxiliary incorporated in the fluoropolymer aqueous dispersion, as they are, serve as the dispersion medium in the above-mentioned "dispersion obtained by incorporating a film-forming auxiliary". Since the above-mentioned "dispersion obtained by incorporating a film-forming auxiliary" comprises a film-forming auxiliary compatible with water, as described hereinabove, the aqueous dispersion medium and the film-forming auxiliary generally form a uniform liquid. In the above-mentioned "dispersion obtained by incorporating a film-forming auxiliary", there are dispersed the above-mentioned fluoropolymer fine particles in such dispersion medium.

In the above-mentioned "dispersion obtained by incorporating a film-forming auxiliary", the film-forming auxiliary preferably amounts to 10 to 99% by mass relative to the total mass of the film-forming auxiliary and aqueous dispersion medium. At levels lower than 10% by mass, the film/membrane-forming property of the resulting fluoropolymer liquid composition may possible become insufficient.

In cases where the fluoropolymer liquid composition according to the invention further comprises a lower alcohol, the above-mentioned "dispersion obtained by incorporating a film-forming auxiliary" is preferably one obtained by incorporating the film-forming auxiliary and lower alcohol into fluoropolymer aqueous dispersion comprising fluoropolymer fine particles dispersed in an aqueous dispersion medium, and the above-mentioned aqueous dispersion medium, film-forming auxiliary and lower alcohol generally constitute a uniform liquid to serve as the dispersion medium in the "dispersion obtained by incorporating the film-forming auxiliary".

The term "fluoropolymer aqueous dispersion" as used herein means a dispersion of fluoropolymer fine particles dispersed in an aqueous dispersion medium as prepared prior to incorporation of the film-forming auxiliary. The concentration of the fluoropolymer fine particles in the fluoropolymer aqueous dispersion is preferably 2 to 60% by mass. A more preferred upper limit is 30% by mass.

The aqueous dispersion medium in the above-mentioned fluoropolymer aqueous dispersion and the aqueous dispersion medium in the above-mentioned "dispersion obtained by incorporating a film-forming auxiliary" are only required to comprise water, hence they may comprise a water-soluble organic solvent as well as water.

The above-mentioned fluoropolymer dispersion composition is preferably an organosol comprising fluoropolymer fine particles dispersed in an organic medium. The "organosol" so referred to herein is a sol comprising fluoropolymer fine particles and an organic medium in which the fluoropolymer fine particles are dispersed in the organic medium. The organosol is preferably one obtained by removing the aqueous dispersion medium from the above-mentioned "dispersion obtained by incorporating the film-forming auxiliary".

The organic medium comprises the film-forming auxiliary in the organosol obtained by removing the aqueous medium from the "dispersion obtained by incorporating the film-forming auxiliary". The organic medium in the organosol further contains water or does not contain water, and the water content is preferably not higher than 10% by mass relative to the organic medium. A more preferred upper limit is 5% by mass. The organic medium is preferably a water-free one since the organosol obtained can form films/membranes excellent in uniformity. In cases where the fluoropolymer liquid composition according to the invention further comprises a lower alcohol, the above-mentioned organic medium comprises the film-forming auxiliary and the lower alcohol.

The fluoropolymer liquid composition according to the invention may contain an additive or additives generally used in liquid compositions, for example a stabilizer. When the fluoropolymer liquid composition according to the invention is a fluoropolymer dispersion composition comprising fluoropolymer fine particles dispersed in a dispersion medium comprising an aqueous dispersion medium, it may further comprise a surfactant generally used in aqueous dispersions.

Preferred as the fluoropolymer liquid composition according to the invention is the above-mentioned organosol in which the content of water is not higher than 10% by mass relative to the organic medium, since such organosol is excellent in film/membrane-forming property.

The fluoropolymer liquid composition according to the invention can be prepared by using any of the conventional methods, for instance.

The level of addition of the film-forming auxiliary is preferably 0.1 to 100 parts by mass relative to each part by mass of the fluoropolymer. At levels lower than 0.1 part by mass, the film/membrane-forming property of the resulting fluoropolymer liquid composition may possibly be insufficient in forming films/membranes using the composition. At levels exceeding 100 parts by mass, the effects producible will no more correspond to the addition level and this is unfavorable from the economical viewpoint. A more preferred lower limit is 0.5 part by mass, and a more preferred upper limit is 20 parts by mass.

The level of addition of the film-forming auxiliary can be adequately selected according to the acid group/acid salt group content of the fluoropolymer and the film/membrane molding conditions.

In cases where the fluoropolymer is a fluoropolymer having a relatively high acid group/acid salt group content, the fluoropolymer liquid composition obtained even at a relatively low addition level will have good film/membrane-forming property and it is preferred that the level of addition of the film-forming auxiliary be low so that the load on the environment may also be reduced; levels of 0.1 to 1 part by mass per part by mass of the fluoropolymer are preferred. The phrase "fluoropolymer having a relatively high acid group/acid salt group content" as used herein means a fluoropolymer such that the molecular weight per acid group/acid salt group is lower than 900.

In cases where the fluoropolymer is a fluoropolymer having a relatively low acid group/acid salt group content, a relatively high film-forming auxiliary addition level is required so that uniform films/membranes may be obtained using the resulting fluoropolymer liquid composition, and levels of 3 to 20 parts by mass per part by mass of the fluoropolymer are preferred. The phrase "fluoropolymer having a relatively low acid group/acid salt group content" as used herein means a fluoropolymer such that the molecular weight per acid group/acid salt group is not lower than 900.

From the industrial productivity viewpoint, it is preferred that the film-forming auxiliary addition level be relatively low; thus, levels of 0.1 to 1 part by mass per part by mass of the fluoropolymer are preferred.

Considering the film/membrane-forming property and the uniformity and other physical properties of the films/membranes obtained, however, it is preferred that the level of addition of the film-forming auxiliary be relatively high; thus, levels of 3 to 20 parts by mass per part by mass of the fluoropolymer are preferred.

The fluoropolymer liquid composition according to the invention may sometimes gelate upon incorporation of the film-forming auxiliary. However, the gel can be again converted to a sol by dilution with an aqueous medium such as water.

In cases where the fluoropolymer liquid composition according to the invention further contains a lower alcohol, the lower alcohol is incorporated at levels of 0.5 to 5 parts by mass per part by mass of the fluoropolymer. In forming films/membranes using the fluoropolymer liquid composition according to the invention, the addition of the lower alcohol at levels given above can lower the surface tension of the fluoropolymer liquid composition, making it possible to form uniform films/membranes.

In cases where the fluoropolymer liquid composition according to the invention further comprise a lower alcohol, the order of addition of the film-forming auxiliary and lower alcohol is not particularly restricted. Thus, the lower alcohol may be added after addition of the film-forming auxiliary, or the film-forming auxiliary may be added after addition of the lower alcohol.

In cases where the fluoropolymer liquid composition according to the invention occurs as an organosol comprising fluoropolymer fine particles dispersed in an organic medium, the organosol is preferably one obtained by the production method given below.

Thus, the method of producing organosols according to the invention is a method for obtaining fluoropolymer dispersion compositions comprising fluoropolymer fine particles dispersed in an organic medium from fluoropolymer aqueous dispersion comprising fluoropolymer fine particles dispersed in an aqueous medium which method comprises incorporating the film-forming auxiliary into the fluoropolymer aqueous dispersion, followed by water evaporation.

The term "water evaporation" used herein means evaporation of the water in the aqueous medium in the dispersion obtained by incorporating the film-forming auxiliary into the fluoropolymer aqueous dispersion. The water evaporation can be carried out using an evaporator, and the evaporator is not particularly restricted but may be, for example, a rotary evaporator. Although the water evaporation may be carried out at room temperature, it is preferred that the composition comprising the fluoropolymer aqueous dispersion and the film-forming auxiliary be heated at 50 to 300°C. If necessary, the evaporation may be carried out under reduced pressure. By heating at the above temperature, it is possible to remove the water lower in boiling point than the film-forming auxiliary from the "dispersion obtained by incorporating the film-forming auxiliary" which comprises the fluoropolymer fine particles dispersed in the dispersion medium composed of the aqueous medium and film-forming auxiliary while the film-forming auxiliary is retained.

The fluoropolymer liquid composition according to the invention, which is obtained by incorporating the film-forming auxiliary into the fluoropolymer, is preferably one in which the fluoropolymer is obtained by the method described below.

Thus, the fluoropolymer is preferably one obtained by emulsion polymerization of a fluorovinyl-ether derivative represented by the general formula (II):

CF₂=CF-O-(CF₂CFY¹-O)ₙ-(CFY²)ₘ-A² (II)

(wherein Y¹ represents a halogen atom or a perfluoroalkyl group, n represents an integer of 0 to 3, and n atoms/groups of Y¹ may be the same or different; Y² represents a halogen atom, m represents an integer of 1 to 5, and m atoms of Y² may be the same or different; and A² represents a -SO₂X² or -COZ² in which X² represents a halogen atom and Z² represents an alkoxy group containing 1 to 4. carbon atoms), followed by hydrolysis treatment of the resulting emulsion polymer dispersion.

The halogen atom represented by X² is not particularly restricted but may be any of fluorine, chlorine, bromine and iodine atoms. A fluorine or chlorine atom is preferred, however.

The alkoxy group containing 1 to 4 carbon atoms as represented by Z² is not particularly restricted but preferably is a n-alkoxy group, more preferably a methoxy group. The group -SO₂X² is preferably -SO₂F, and the group -COZ² is preferably -COOCH₃. In the above general formula (II), A² is preferably -SO₂X².

Y¹, Y², n and m in the above general formula (II) are respectively the same as Y¹, Y², n and m in the general formula (I) given hereinabove. Y¹, Y², n and m in the general formula (I) representing the acid/acid salt fluorovinyl ether unit mentioned above are derived from Y¹, Y², n and m in the general formula (II) representing the fluorovinyl-ether derivative.

The emulsion polymer dispersion obtained by emulsion polymerization of the above-mentioned fluorovinyl-ether derivative contains precursor fluoropolymer fine particles comprising a fluoropolymer precursor. The term "fluoropolymer precursor" as used herein means a polymer giving the above-mentioned fluoropolymer upon hydrolysis treatment, as described later herein.

The fluoropolymer precursor comprises fluorovinyl-ether derivative units derived from the above-mentioned fluorovinyl-ether derivative and has -SO₂X² and/or -COZ² groups. The fluoropolymer precursor may be one obtained by emulsion polymerization of one or two or more fluorovinyl-ether derivatives.

The emulsion polymerization is generally carried out in an aqueous reaction medium. The term "aqueous reaction medium" as used herein means a medium in which the emulsion polymerization is carried out and which comprises water. The aqueous reaction medium is only required to comprise water, hence it may comprise a water-soluble organic solvent as well as water; one containing no water-soluble organic solvent is preferred, however. The aqueous reaction medium may contain one or more of those additives and emulsifying agents which are generally used in aqueous dispersions, for example surfactants, stabilizers, and existing emulsifiers to be described later herein. The aqueous reaction medium does not include, within the meaning thereof, such monomer(s) as the fluorovinyl-ether derivative(s) occurring in the reaction system in which the emulsion polymerization is carried out or the polymer formed by the emulsion polymerization. After the above-mentioned emulsion polymerization, the aqueous reaction medium serves as a dispersion medium (aqueous dispersion medium) in the emulsion polymer dispersion and can be used as it is as an aqueous medium in the hydrolysis treatment to be mentioned later herein.

In the above emulsion polymerization, the method of emulsification may be one comprising carrying out the emulsification using any of those conventional emulsifiers generally used in emulsion polymerization (hereinafter referred to as "existing emulsifiers"), for example ammonium perfluorooctanoate [C₇F₁₅COONH₄], or one comprising causing emulsification by using an agent not belonging to the category of existing emulsifiers but having emulsifying activity (hereinafter such agent is referred to as "emulsifying agent") and causing the same to bind to the polymer to thereby provide the polymer with emulsifying activity, or one comprising carrying out the emulsification by using both an existing emulsifier and such an emulsifying agent as defined above. As such emulsifying agent, there may be mentioned, among others, compounds having sulfonic acid groups in salt form. In the emulsion polymerization, the existing emulsifier and/or the emulsifying agent is generally used in an amount of 0.01 to 10% by mass relative to the aqueous reaction medium.

The above-mentioned emulsifying agent may be, for example, an acid salt fluorovinyl-ether derivative represented by the general formula (III):

CF₂=CF-O- (CF₂CFY¹-O)ₙ-(CFY²)ₘ-A³ (III)

(wherein Y¹, Y², n and m are as defined hereinabove and A³ represents -SO₃X³ or -COOZ³ in which X³ represents NR¹R²R³R⁴, M³ or M⁴_{1/2} (in which R¹, R², R³ and R⁴ are the same or different and each represents a hydrogen atom or an alkyl group containing 1 to 4 carbon atoms, M³ represents an alkali metal and M⁴ represents an alkaline earth metal), and Z³ represents NR⁷R⁸R⁹R¹⁰, M⁵ or M⁶_{1/2} (in which R⁷, R⁸, R⁹ and R¹⁰ are the same or different and each represents a hydrogen atom or an alkyl group containing 1 to 4 carbon atoms, M⁵ represents an alkali metal and M⁶ represents an alkaline earth metal). The "acid salt fluorovinyl-ether derivative" so referred to herein has the above-mentioned acid salt groups. The acid salt groups which the acid salt fluorovinyl-ether derivative has are preferably sulfonic acid groups in alkali metal salt or alkaline earth metal salt form.

The alkyl group containing 1 to 4 carbon atoms as represented by R¹, R², R³ and/or R⁴ is not particularly restricted but may be any of methyl, ethyl, propyl and butyl groups. The alkali metal M³ is not particularly restricted but includes, for example, Li, Na, K, Cs.
The alkaline earth metal M⁴ is not particularly restricted but includes, for example, Mg, Ca.

The alkyl group containing 1 to 4 carbon atoms as represented by R⁷, R⁸, R⁹ and/or R¹⁰ is not particularly restricted but includes the same ones as the alkyl groups containing 1 to 4 carbon atoms mentioned above referring to R¹, R², R³ and R⁴. The alkali metal M⁵ is not particularly restricted but includes the same ones as the above-mentioned alkali metals represented by M³. The alkaline earth metal M⁶ is not particularly restricted but includes, for example, the same ones as the alkaline earth metals mentioned above referring to M⁴.

The acid salt fluorovinyl-ether derivative is preferably one represented by the general formula (III) in which A³ is -SO₃X³.

The above-mentioned acid salt fluorovinyl-ether derivative and the above-mentioned fluorovinyl-ether derivative are common with the above-mentioned ethylenic monomer in that they can have a vinyl group whose hydrogen atoms may be wholly substituted by fluorine atoms but differ from the ethylenic monomer giving the ethylenic monomer units mentioned above in that they give the above-mentioned acid/acid salt fluorovinyl ether units in the fluoropolymer upon hydrolysis treatment following emulsion polymerization.

When the above-mentioned acid salt fluorovinyl-ether derivative is used, emulsification can be effected even if the aqueous reaction medium contains no existing emulsifier, so that, unlike the prior art, it is not necessary to remove any existing emulsifier after emulsion polymerization. The acid salt fluorovinyl-ether derivative shows emulsifying activity in the emulsion polymerization and, further, since it is an ethylenic compound, it is possible to cause it to participate as a monomer in the polymerization reaction to constitute at least a part of the molecular structure of the fluoropolymer precursor. The polymer chain obtained by polymerizing the above-mentioned acid salt fluorovinyl-ether derivative can also have emulsifying activity.

In the above-mentioned emulsion polymerization, it is preferred that an emulsifying agent be used, without using any existing emulsifier, since there is no need for emulsifier removal after the polymerization reaction and, further, the agent having emulsifying activity can be used as a monomer. Under certain polymerization conditions, the above emulsion polymerization may result in a decreased number of fluoropolymer precursor particles with an increased particle size, which in turn may increase the load on the ultrafiltration membrane when the treatment for removing low-molecular-weight substances, which is to be described later herein, is carried out in the manner of ultrafiltration and, further, which may render the product films/membranes not uniform in the step of film/membrane molding. In such cases, existing emulsifiers are preferably used since those inconveniences can be easily avoided with them.

The above emulsion polymerization is preferably carried out using existing emulsifiers.

The above emulsion polymerization can be carried out in the conventional manner except that the above-mentioned emulsifying agent can be used.

The emulsion polymerization may also be carried out in the manner of the so-called "seed polymerization" which comprises diluting the above-mentioned dispersion obtained by polymerization using the above-mentioned existing emulsifier and/or emulsifying agent in an amount larger than 0.01 to 10% by mass relative to the aqueous reaction medium and then further continuing the polymerization so that the number of precursor fluoropolymer fine particles in the emulsion polymer dispersion obtained may be increased.

In preparing the fluoropolymer liquid composition according to the invention, the above-mentioned emulsion polymer dispersion comprising precursor fluoropolymer fine particles may be one obtained by carrying out the emulsion polymerization in the simultaneous presence of a fluorovinyl-ether derivative represented by the above general formula (II) and an acid salt fluorovinyl-ether derivative represented by the above general formula (III). The precursor fluoropolymer fine particles, which have the hydrophobic -SO₂X² and/or -COZ² groups coming from the fluorovinyl-ether derivative and the hydrophilic -SO₃X³ and/or -COOZ³ groups coming from the acid salt fluorovinyl-ether derivative, can take a core/shell structure with the fluorovinyl-ether derivative-derived polymer chain(s) forming the core and the acid salt fluorovinyl-ether derivative-derived polymer chain(s) forming the shell.

The emulsion polymer dispersion comprising the precursor fluoropolymer fine particles may be one obtained by carrying out the emulsion polymerization in the simultaneous presence of an acid salt fluorovinyl ether unit-based polymer obtained by polymerizing the above-mentioned acid salt fluorovinyl-ether derivative and the above-mentioned fluorovinyl-ether derivative. The precursor fluoropolymer fine particles obtained by this method comprise seed polymers.

In cases where the fine particles comprising the fluoropolymer precursor have or comprise the above-mentioned core/shell structure or seed polymers, the above-mentioned acid salt fluorovinyl-ether derivative and the polymer chains comprising the acid salt fluorovinyl-ether derivative have emulsifying activity and, therefore, it is not necessary to add, in the step of polymerization, any of the emulsifiers generally used in the conventional emulsion polymerization and there is no need for emulsifier removal in a subsequent step.

In preparing the fluoropolymer liquid composition according to the invention, the fluoropolymer is preferably one obtained by subjecting the above-mentioned emulsion polymer dispersion to hydrolysis treatment. The hydrolysis treatment can be carried out by adding an alkali to the emulsion polymer dispersion.

The alkali to be used in the hydrolysis treatment is not particularly restricted but may be any of those alkalis which are generally used in hydrolysis, including, among others, alkali metal hydroxides and alkaline earth metal hydroxides. As such hydroxides, there may be mentioned, for example, sodium hydroxide, potassium hydroxide and lithium hydroxide.

The above hydrolysis treatment converts the -SO₂X² and/or -COZ² groups which the above fluoropolymer precursor has to acid salt groups and, therefore, can convert the fluoropolymer precursor to an acid salt fluorovinyl ether unit-based fluoropolymer (hereinafter sometimes referred to as "acid salt fluoropolymer").

In cases where the fluoropolymer precursor has -SO₂X² groups (in which X² is as defined above, namely represents a halogen atom), the precursor is generally unstable and readily coagulates upon addition of an acid. However, an alkali is added in the above hydrolysis treatment, so that, unless the alkali is added abruptly, the fluoropolymer precursor can be maintained stably in a state of dispersion in the aqueous medium without coagulation thereof and the - SO₂X² groups can be quantitatively converted to sulfonic acid salt groups.

The above hydrolysis treatment can convert the above emulsion polymer dispersion to fluoropolymer aqueous dispersion comprising the corresponding acid salt fluoropolymer dispersed in an aqueous dispersion medium.

In preparing the fluoropolymer liquid composition according to the invention, the fluoropolymer may be one obtained by the above-mentioned hydrolysis treatment of the above-mentioned emulsion polymer dispersion, followed by further treatment with an acid, namely acid treatment, according to need.

The acid to be used in the above-mentioned acid treatment is not particularly restricted but may be any of those acids generally used in neutralizing alkalis; thus, it may be a mineral acid, for instance. As the mineral acid, there may be mentioned, for example, hydrochloric acid and sulfuric acid.

The above acid treatment converts the acid salt groups of the above-mentioned acid salt fluoropolymer to the acid groups and thus can convert the acid salt fluoropolymer to the corresponding acid fluorovinyl ether unit-based fluoropolymer (hereinafter sometimes referred to as "acid fluoropolymer").

The end point of the hydrolysis reaction in the above-mentioned hydrolysis treatment and the end point of the neutralization reaction in the above-mentioned acid treatment can be detected based on the fact that no more alkali or acid is consumed and the pH is stabilized.

The reaction temperature in the hydrolysis treatment and the reaction temperature in the acid treatment are not particularly restricted but may be room temperature. From the reaction rate viewpoint, however, each reaction is preferably carried out at a temperature of 30 to 100°C. The fluoropolymer precursor concentration in carrying out the hydrolysis treatment or the acid salt fluoropolymer concentration in carrying out the acid treatment is not particularly restricted but, when it is 5 to 15% by mass relative to the aqueous medium, the viscosity of the emulsion polymer dispersion comprising the aqueous medium and fluoropolymer precursor or the viscosity of the fluoropolymer aqueous dispersion comprising the aqueous medium and acid salt fluoropolymer falls within a preferred range and the particles comprising the fluoropolymer precursor or the particles comprising the acid salt fluoropolymer show a uniform distribution, so that the hydrolysis treatment or acid treatment can be allowed to proceed smoothly.

. In preparing the fluoropolymer liquid composition according to the invention, the fluoropolymer is preferably one obtained by subjecting the above-mentioned emulsion polymer dispersion to hydrolysis treatment, if necessary followed by acid treatment, and further followed by treatment for removing low-molecular-weight substances (hereinafter sometimes referred to as treatment for removing low-molecular-weight substances). The low-molecular-weight substances include the monomer(s) remaining after the emulsion polymerization, polymerization initiator residues, unnecessary low-molecular-weight polymer molecules, or substances formed upon hydrolysis treatment of the fluoropolymer precursor and, when the residues of the emulsifier used in the emulsion polymerization remain, they can also be removed.

The treatment for removing low-molecular-weight substances is not particularly restricted but includes, among others, centrifugation, electrophoresis, and ultrafiltration. The ultrafiltration method is preferably used, however. The ultrafiltration method is not particularly restricted but may be any of those methods of removing low-molecular-weight substances which use an ultrafiltration apparatus having an ultrafiltration membrane, including the centrifugal ultrafiltration method and circulating ultrafiltration method, among others. Suitably usable as the ultrafiltration membrane-containing ultrafiltration apparatus are commercial ones and, for use in laboratories, there may be mentioned, for example, Centriprep (trademark; product of Amicon), Millitan (trademark; product of Millipore) and Pellicon (trademark; product of Millipore). In the above ultrafiltration step, the fluoropolymer obtained can also be concentrated.

The above treatment for removing low-molecular-weight substances may be carried out after the hydrolysis treatment and, when the hydrolysis treatment is further followed by acid treatment, it may be carried out after the acid treatment.

In preparing the fluoropolymer liquid composition according to the invention, the above-mentioned hydrolysis treatment and acid treatment can be carried out in an aqueous dispersion. In this case, the hydrolysis treatment is preferably carried out in an aqueous medium, and the acid treatment is preferably carried out in an aqueous dispersion medium. The aqueous medium is only required to comprise water, hence may comprise a water-soluble organic solvent as well as water.

When, in preparing the fluoropolymer liquid composition according to the invention, the fluoropolymer is one obtained by emulsion polymerization, the emulsion polymerization and hydrolysis treatment and, further, the acid treatment to be carried out according to need can all be carried out in an aqueous dispersion.

After the hydrolysis treatment, the aqueous medium in the hydrolysis treatment can be used, as it is, as the aqueous dispersion medium in the fluoropolymer aqueous dispersion. The aqueous dispersion medium in the acid treatment can be used, as it is, as the aqueous dispersion medium in the fluoropolymer aqueous dispersion.

In the process for preparing the fluoropolymer liquid composition according to the invention, the above-mentioned aqueous medium is the dispersion medium in the above-mentioned emulsion polymer dispersion and the dispersion medium in the aqueous dispersion in which the above-mentioned hydrolysis treatment is carried out, the above-mentioned aqueous dispersion medium is the dispersion medium in the fluoropolymer aqueous dispersion obtained after the above-mentioned hydrolysis treatment, the dispersion medium in the aqueous dispersion in which the above-mentioned acid treatment is carried out, and the dispersion medium in the fluoropolymer aqueous dispersion obtained after the above-mentioned hydrolysis treatment and acid treatment, and the above-mentioned aqueous reaction medium is the dispersion medium in the aqueous dispersion system in which the emulsion polymerization is carried out and, in this respect, the above-mentioned aqueous medium, the above-mentioned aqueous dispersion medium and the above-mentioned aqueous reaction medium conceptually differ from one another.

In preparing the fluoropolymer liquid composition according to the invention, the fluoropolymer may be one obtained by subjecting the above-mentioned acid salt fluorovinyl-ether derivative to emulsion polymerization substantially without using the above-mentioned fluorovinyl-ether derivative. The phrase "substantially without using" as used herein means that in the case of this fluoropolymer, for instance, the content of acid salt fluorovinyl ether units derived from the above-mentioned fluorovinyl-ether derivative among the total number of moles of the monomers from which the fluoropolymer-constituting monomer units are derived is lower than 5 mole percent.

The fluoropolymer obtained by this method has a polymer chain derived from the acid salt fluorovinyl-ether derivative and acid salt fluorovinyl-ether derivative and having emulsifying activity, as described hereinabove, and, therefore, it is no more necessary, in the step of polymerization, to add such an emulsifier as generally used in the conventional emulsion polymerization, hence it is not necessary to remove such emulsifier in a later step.

In preparing the fluoropolymer liquid composition according to the invention, the fluoropolymer may be one obtained by carrying out the copolymerization of the fluorovinyl-ether derivatives in the presence of an iodide compound such as 1,4-diiodoperfluorobutane to give a polymer dispersion comprising a block polymer and subjecting the polymer dispersion obtained to the above-mentioned hydrolysis treatment.

The fluoropolymer obtained by the method comprising subjecting an acid salt fluorovinyl-ether derivative to emulsion polymerization substantially without using any fluorovinyl-ether derivative and the fluoropolymer obtained by carrying out the copolymerization in the presence of an iodine compound each comprises an acid salt fluoropolymer and it may be used as such for the preparation of a fluoropolymer dispersion composition or further subjected to the above-mentioned acid treatment to give a fluoropolymer comprising an acid fluoropolymer, which is to be used for the preparation of a fluoropolymer liquid composition.

In preparing the fluoropolymer liquid composition according to the invention, the fluoropolymer may be one obtained by the method comprising subjecting membranous moldings formed from an -SO₂F group-containing, fluoropolymer precursor to hydrolysis in the form of membranous moldings as such to convert the -SO₂F groups to sulfonic acid groups or a salt form thereof and dissolving the membranous moldings obtained in a mixed solvent comprising an alcohol, or one obtained by the method comprising dispersing the membranous moldings obtained in water with stirring at a temperature of 220 to 300°C.

In preparing the fluoropolymer liquid composition according to the invention, the fluoropolymer in which, in the general formula (I) given hereinabove, A¹ is -SO₂X¹ in which X¹ is NR⁵R⁶ may be one obtained by polymerizing an acid fluorovinyl-ether derivative represented by the general formula (IV):

CF₂=CF-O- (CF₂CFY¹-O)ₙ- (CFY²) ₘ-SO₂NR⁵R⁶ (IV)

(wherein Y¹, Y², n, m, R⁵ and R⁶ are as defined hereinabove).

The fluoropolymer to be contained in the fluoropolymer liquid composition according to the invention is preferably one obtained by subjecting an emulsion polymer dispersion obtained by emulsion polymerization of a fluorovinyl-ether derivative represented by the general formula (II) given hereinabove to hydrolysis treatment.
The above-mentioned fluoropolymer, when obtained by this method comprising carrying out the emulsion polymerization and hydrolysis treatment, is generally obtained in the form of fine particles and is suited for use in preparing the above-mentioned fluoropolymer dispersion comprising the fluoropolymer fine particles and the film-forming auxiliary.

The fluoropolymer liquid composition according to the invention is excellent in film/membrane-forming property, since it comprises an organic liquid which is compatible with water and has a boiling point exceeding 100°C but not higher than 300° as incorporated therein as the film-forming auxiliary.

The fluoropolymer liquid composition according to the invention comprises the film-forming auxiliary as incorporated therein and, therefore, even the above-mentioned fluoropolymer liquid composition which comprises fluoropolymer fine particles is excellent in film/membrane-forming property since the fluoropolymer fine particles are in a swollen state and the fluoropolymer fine particles partly occur in a mutually fused state. The fluoropolymer liquid composition in which the fluoropolymer fine particles are partly in a mutually fused state, as mentioned above, is therefore excellent in film/membrane-forming property even when the average particle diameter of the fluoropolymer fine particles is as great as 10 to 300 nm.

The film-forming auxiliary which is contained in the fluoropolymer liquid composition according to the invention and has a boiling point within the range specified above remains in the fluoropolymer liquid composition even in the process of film/membrane formation to improve the film/membrane-forming property of the composition and, when it is necessary to remove the film-forming auxiliary from the films/membranes obtained, the removal can be effected with ease by heating.

The fluoropolymer dispersion composition of the invention, which has the above-described constitution, can be adequately used in forming fibers and films/membranes. The "films/membranes" so referred to herein are films/membranes including the so-called thin films/membranes and the term conceptually includes films and sheets as well. The films/membranes may be those obtained, for example, by cast film formation, impregnation, or coating. They do not include substrates, porous supports used in film/membrane formation.

The film/membrane of the present invention is one obtained by cast film formation using the above-mentioned fluoropolymer dispersion composition. The "cast film formation" generally denotes the technique which comprises applying the above-mentioned fluoropolymer liquid composition to the surface of a substrate, drying the coat at ordinary temperature and/or with heating, if necessary immersing the same in water, and peeling the resulting film/membrane from the substrate surface to give a thin film/membrane. The "ordinary temperature" so referred to herein is a temperature of 30°C, and "with heating" herein refers to heating at a temperature of 50 to 80°C. The drying mentioned above, when carried out with heating, is preferably carried out for 30 to 60 minutes.

The above-mentioned substrate to be used in cast film formation is not particularly restricted but includes, among others, glass, stainless steel and so forth. The method of application is not particularly restricted but includes, among others, application by impregnation, spray coating and so forth.

When the film/membrane obtained by the above-mentioned cast film formation is further heated at 150 to 300°C for 20 to 40 minutes, the film-forming auxiliary can be completely removed from the film/membrane.

The film/membrane of the invention also includes one obtained by impregnating a porous support with the above-mentioned fluoropolymer liquid composition and then removing the liquid medium. The term "liquid medium" as used herein means a solvent capable of dissolving the fluoropolymer and/or a dispersion medium capable of dispersing the fluoropolymer, which occurs as a liquid at ordinary temperature around 20°C. As the solvent capable of dissolving the fluoropolymer and the dispersion medium capable of dispersing the fluoropolymer, there may be mentioned herein the above-mentioned aqueous dispersion medium, film-forming auxiliary, lower alcohol and organic medium, among others.

The above-mentioned porous support is not particularly restricted but may be any one having a porous structure. It may be an organic or inorganic material; thus, it includes, among others, glass wool, ceramics, alumina, polytetrafluoroethylene [PTFE] porous films, carbon, nonwoven fabrics, and various polymer-derived ones. The removal of the liquid medium may be carried out by heating at 50 to 80°C, for instance, or by heating to a temperature not lower than the glass transition point of the fluoropolymer, or by heating to a temperature not lower than the melting point of the fluoropolymer. The temperature not lower than the glass transition temperature of the fluoropolymer is generally a temperature of 150 to 350°C, and the temperature not lower than the melting point of the fluoropolymer is generally a temperature of 200 to 350°C.

The thickness of the film/membrane obtained by cast film formation and the thickness of the film/membrane obtained by impregnating a porous support with the fluoropolymer liquid composition each is preferably 10 to 40 µm. When the thickness is less than 10 µm, the mechanical strength of the film/membrane will be insufficient and, when it exceeds 40 µm, the use of the film/membrane in a solid polymer electrolyte type fuel cell, which is to be mentioned later herein, may result in deteriorated fuel cell performance characteristics.

The active substance-immobilized material of the present invention comprises a fluoropolymer and an active substance and is one obtained by applying a substrate with a liquid composition comprising the above-defined fluoropolymer liquid composition and the active substance. When the above-mentioned liquid composition is applied to the substrate, the fluoropolymer and active substance are immobilized onto the substrate.

The active substance is not particularly restricted but may be any one capable of remaining active in the active substance-immobilized material; it can be appropriately selected according to the intended purpose of the active substance-immobilized material of the invention. In some instances, a catalyst may be adequately used. The catalyst is not particularly restricted but may be any of those generally used as electrode catalysts, including, among others, metals containing platinum or rutheniume.

The substrate which is to be applied with the above-mentioned liquid composition is not particularly restricted but includes, among others, the above-mentioned porous supports, resin moldings, metal sheets and so forth. Preferred are, among others, those electrolyte membranes and porous carbon electrodes which are used in fuel cells. The electrolyte membranes preferably comprise fluoropolymer, and it may comprise the above-mentioned fluoropolymer.

The "applying of a substrate with a liquid composition" so referred to above comprises applying the above-mentioned liquid composition to the substrate, drying if necessary, and generally further heating at a temperature not lower than the melting point of the fluoropolymer. The heating conditions are not particularly restricted but may be such that the fluoropolymer and active substance may be immobilized on the substrate; for example, 2 to 30 minutes of heating at 200 to 350°C is preferred, however.

The electrolyte membrane comprises the above-mentioned active substance-immobilized material. The electrolyte membrane may further comprise some substance other than the active substance-immobilized material in an amount such that the properties of the active substance-immobilized material may not be deteriorated.

The membrane/electrode assembly [MEA] of the present invention comprises the above electrolyte membrane. The membrane/electrode assembly may further comprise some substance other than the electrolyte membrane in an amount such that the properties of the electrolyte membrane may not be deteriorated.

The solid polymer electrolyte fuel cell of the invention comprises the above-mentioned film/membrane, active substance-immobilized material, electrolyte membrane and/or membrane/electrode assembly. As the solid polymer electrolyte fuel cell of the invention, there may be mentioned, for example, one comprising the above-mentioned film/membrane, one comprising the above-mentioned active substance-immobilized material, one comprising the above-mentioned electrolyte membrane, one comprising the above-mentioned membrane/electrode assembly, and one comprising the above-mentioned film/membrane and active substance-immobilized material, among others.

The solid polymer electrolyte fuel cell may also be one further comprising such constituent components as solid polymer electrolyte fuel cell constituent gases.

In each of the above-mentioned fluoropolymer liquid composition, the above-mentioned film/membrane obtained by cast film formation, the above-mentioned film/membrane obtained by impregnating a porous support with the fluoropolymer liquid composition, and the above-mentioned active substance-immobilized material, electrolyte membrane, membrane/electrode assembly or solid polymer electrolyte fuel cell, use is made of a fluoropolymer having sulfonic acid and/or carboxylic acid groups which may occur in salt form, preferably a fluoropolymer having sulfonic acid groups which may occur in salt form.

### BEST MODES FOR CARRYING OUT THE INVENTION

The following examples illustrate the present invention in further detail.

### Example 1

(1) An emulsion polymer dispersion (200 ml) containing a copolymer obtained by emulsion polymerization of CF₂=CF₂ and CF₂=CFOCF₂CF₂SO₂F and having an EW value (polymer weight [g] equivalent to ion exchange capacity for exchanging 1 mole of ions) of 710 was 3-fold diluted with pure water, and a 10% (by mass) aqueous solution of sodium hydroxide was added dropwise to the dilution with stirring at 80°C while maintaining the pH at 9 to 12, to carry out the hydrolysis of -SO₂F. After 2 hours, at the time point at which the reaction had proceeded to an extent of about 80%, the rate of consumption of sodium hydroxide decreased as compared with the initial stage, so that the aqueous solution of sodium hydroxide was added until the expected equivalent consumption, followed by standing in an oven maintained at 80°C. After confirming that the mixture was almost neutral, an amount of the aqueous solution of sodium hydroxide corresponding to 20% of the expected consumption was further added and the resultant mixture was allowed to stand in the same oven. After 14 hours, after confirming that the pH was stable without further consumption of sodium hydroxide, the excess of sodium hydroxide was neutralized with hydrochloric acid, and the resultant mixture was purified and concentrated using an ultrafilter (trademark: Pellicon Unit; product of Millipore; molecular weight cut-off: 10000) until the filtrate showed an electric conductivity not higher than 0.01 S (siemens) to give 150 ml of fluoropolymer aqueous dispersion with a fluoropolymer fine particle concentration of 26% by mass.

This fluoropolymer aqueous dispersion was very stable and, even after 1 month of standing, no settlement of the fluoropolymer fine particles was observed by the eye.
(2) Triethyl phosphate (1.2 ml) and 0.5 ml of isopropanol were compounded with 1 ml of the fluoropolymer aqueous dispersion obtained in (1). A viscous fluoropolymer dispersion composition was obtained which was slightly more turbid than the emulsion polymer dispersion obtained in (1). A portion of the fluoropolymer dispersion composition obtained was collected and measured for fluoropolymer concentration by the dry weight method; the concentration was 10% by mass.
(3) The fluoropolymer dispersion composition obtained in (2) was applied onto a glass sheet, and the whole was allowed to stand in an oven maintained at 80°C for 30 minutes to form a transparent membrane. Immersion, together with the glass plate, in pure water easily resulted in peeling off of the membrane to give a thin membrane with a thickness of 10 µm.
(4) The emulsion polymer dispersion, fluoropolymer aqueous dispersion and fluoropolymer dispersion composition obtained as described above in (1) and (2) were each applied onto a silicon wafer and, after drying at room temperature (20°C), each coat film formed was observed under an atomic force microscope [AFM]. The photograph, taken by using the AFM, of the coat film formed by the emulsion polymer dispersion is shown in Fig. 1 (a), that of the coat film formed by the fluoropolymer aqueous dispersion in Fig. 1 (b), and that of the coat film formed by the fluoropolymer dispersion composition in Fig. 1 (c).

As can be seen in Fig. 1 (a) and Fig. 1(b), the polymer particles before and after hydrolysis showed little changes in particle size and shape and the particles are not so close to one another whereas the polymer particles in the fluoropolymer dispersion composition resulting from incorporating of triethyl phosphate were swollen or modified in shape by fusion and the areas of mutual contacting of the particles were larger.

### Example 2

A porous membrane made of polytetrafluoroethylene [PTFE] (product of Daikin Industries) was impregnated with the fluoropolymer dispersion composition obtained in Example 1 (2), the whole was allowed to stand in an oven maintained at 80°C for 30 minutes to give a transparent membrane with a thickness of 15 µm.

### Example 3

A 5-ml portion of the fluoropolymer aqueous dispersion obtained in Example 1 (1) was two-fold diluted with pure water, and 10 ml of triethyl phosphate was compounded with the dilution with stirring. Water evaporation was caused by heating at 40°C in a rotary evaporator to give an organosol with the triethyl phosphate as the dispersion medium.

In the same manner as in Example 1 (3), a thin membrane was formed from the organosol obtained and peeled off from the glass sheet, whereupon a thin membrane with a thickness of 10 µm was obtained.

### Comparative Example 1

Using the fluoropolymer aqueous dispersion obtained in Example 1 (1) alone, a membrane was formed in the same manner as in Example 1 (3).

The transparent membrane obtained showed cracking and was not a continuous membrane. When immersed in pure water, it was redispersed.

### Comparative Example 2

A composition was obtained in the same manner as in Example 1 except that ethanol was used in lieu of triethyl phosphate, and a membrane was formed using the composition obtained.

The membrane obtained showed cracking and, when immersed in pure water, it was redispersed.

While the triethyl phosphate-containing, fluoropolymer liquid compositions as obtained in Examples 1 to 3 all could give membranes, the compositions of Comparative Examples 1 and 2 as used without incorporation of triethyl phosphate failed to give continuous membranes similar to those obtained in Examples 1 to 3.

### INDUSTRIAL APPLICABILITY

The fluoropolymer liquid composition according to the invention, which has the constitution described hereinabove, is excellent in film/membrane-forming property and can give acid/acid salt group-containing, namely sulfonic acid group- and/or carboxyl group-containing, fluoropolymer film/membranes.

## Claims

1. A composition, which is a fluoropolymer liquid dispersion composition comprising
i) fluoropolymer fine particles, at least 25 wt.-% of which are substantially spherical, and which comprise a fluoropolymer comprising an acid/acid salt fluorovinyl ether unit of the formula (I): 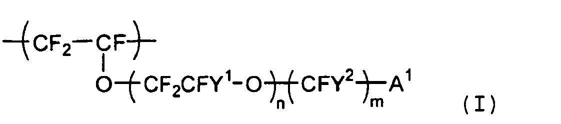 wherein
Y¹ each individually is halogen or perfluoroalkyl,
n is an integer of 0-3,
Y² each individually is halogen,
m is an integer of 1-5; and
A¹ is -SO₂X¹ or -COOZ¹,
wherein
X¹ is -OH, - ONR¹R²R³R⁴, -NR⁵R⁶ or -OM¹_{1/L}, with R¹, R², R³ and R⁴ each individually being H or C₁₋₄-alkyl, and R⁵ and R⁶ each individually being H, an alkali metal, alkyl or a sulfonyl-containing group; and
Z¹ is H, -NR⁷R⁸R⁹R¹⁰ or -M²_{1/L}, with R⁷, R⁸, R⁹ and R¹⁰ each individually being H or C₁₋₄-alkyl, and M¹ and M² each being a metal having a valence of L and being selected from the groups 1, 2, 4, 8, 11, 12 and 13 of the periodic table; and
ii) as a film-forming auxiliary, a phosphoric acid ester which is compatible with water and has a boiling point of more than 100°C to 300°C.

2. The composition of claim 1, wherein the amount of the film-forming auxiliary, based on the fluoropolymer, is 0.1-100 wt.-%.

3. The composition of claim 1 or 2, wherein the fluoropolymer is a binary or multinary copolymer comprising the acid/acid salt fluorovinyl ether unit and an ethylenic monomer-derived ethylenic monomer unit.

4. The composition of claim 3, wherein the ethylenic monomer is tetrafluoroethylene.

5. The composition of any of claims 1-4, wherein Y¹ is -CF₃, Y² is F, n is 0 or 1, and m is 2.

6. The composition of Claim 5, wherein n is 0.

7. The composition of any of claims 1-6, wherein the content of the fluoropolymer is 1-60 wt.-%.

8. The composition of any of claims 1-7, wherein the fluoropolymer is obtained by hydrolysis treatment of an emulsion polymer dispersion obtained by emulsion polymerization of a fluorovinyl-ether derivative of the formula (II):
CF₂=CF-O-(CF₂CFY¹-O)ₙ-(CFY²)ₘ-A² (II)
wherein Y¹, Y², n and m are the same as defined in claim 1 for formula (I), and A² is -SO₂X² or -COZ² wherein X² is halogen and Z² is C₁₋₄-alkoxy

9. The composition of any of claims 1-8, wherein at least 50 wt.-% of the fluoropolymer fine particles are substantially spherical.

10. The composition of any of claims 1-9, wherein the spherical fluoropolymer fine particles have an average particle diameter of ≥ 10 nm.

11. The composition of any of claims 1-10, which is obtained by incorporating the film-forming auxiliary into a dispersion comprising the fluoropolymer fine particles dispersed in an aqueous dispersion medium.

12. The composition of claim 11, wherein the amount of the film-forming auxiliary, based on the total of the film-forming auxiliary and the aqueous dispersion medium, is 10-99 wt.-%.

13. The composition of any of claims 1-12, which further comprises a lower alcohol.

14. The composition of Claim 13, wherein the amount of the lower alcohol, based on the fluoropolymer, is 0.5-5 wt.

15. The composition of any of claims 1-10, which is an organosol comprising the fluoropolymer fine particle dispersed in an organic medium comprising the film-forming auxiliary and optionally ≤ 10 wt.-% water, based on the organic medium.

16. The composition of Claim 15, wherein the organic medium further comprises a lower alcohol.

17. The composition of Claim 16, wherein the amount of the lower alcohol, based on the fluoropolymer, is 0.5-5 wt.

18. A method of producing the composition of any of claims 15-17, which comprises incorporating a film-forming auxiliary into a dispersion comprising the fluoropolymer fine particle dispersed in an aqueous dispersion medium, followed by water evaporation.

19. A film/membrane obtainable by cast film formation using the composition of any of claims 1-17.

20. A film/membrane obtainable by impregnating a porous support with the composition of any of claims 1-17, followed by removal of the liquid medium.

21. An active substance-immobilized material, which is obtainable by applying a liquid composition comprising an active substance and the composition of any of claims 1-17 to a substrate.

22. An electrolyte membrane comprising the active substance-immobilized material of Claim 21.

23. A membrane/electrode assembly comprising the electrolyte membrane of Claim 22.

24. A solid polymer electrolyte fuel cell comprising the film/membrane of Claim 19 or 20, the active substance-immobilized material of Claim 21, the electrolyte membrane of Claim 22 and/or the membrane/electrode assembly of Claim 23.

## Patentansprüche

1. Zusammensetzung, die eine Fluorpolymer-Flüssigdispersionszusammensetzung ist und folgendes umfasst:
i) Fluorpolymerfeinpartikel, von denen mindestens 25 Gew.% im wesentlichen sphärisch sind und die ein Fluorpolymer umfassen, das eine Säure/Säuresalz-Fluorvinylethereinheit der Formel (I) umfasst: 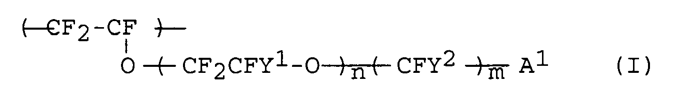 worin
Y¹ jeweils individuell Halogen oder Perfluoralkyl ist,
n eine ganze Zahl von 0 bis 3 ist,
Y² jeweils individuell Halogen ist,
m eine ganze Zahl von 1 bis 5 ist, und
A¹ -SO₂X¹ oder -COOZ¹ ist,
worin
X¹ -OH, -ONR¹R²R³R⁴, -NR⁵R⁶ oder -OM¹_{1/L} ist, wobei R¹, R², R³ und R⁴ jeweils individuell H oder C₁₋₄-Alkyl sind und R⁵ und R⁶ jeweils individuell H, ein Alkalimetall, Alkyl oder eine Sulfonyl-haltige Gruppe ist; und
Z¹ H, -NR⁷R⁸R⁹R¹⁰ oder -M²_{1/L} ist, wobei R⁷, R⁸, R⁹ und R¹⁰ jeweils individuell H oder C₁₋₄-Alkyl ist und M¹ und M² jeweils ein Metall ist, das eine Valenz von L aufweist und ausgewählt aus den Gruppen 1, 2, 4, 8, 11, 12, und 13 des Periodensystems, und
ii) als filmbildendes Hilfsmittel einen Phosphorsäureester, der kompatibel mit Wasser ist und einen Siedepunkt von mehr als 100°C bis 300°C aufweist.

2. Zusammensetzung gemäß Anspruch 1, worin die Menge des filmbildenden Hilfsmittels, bezogen auf das Fluorpolymer, 0,1 bis 100 Gew.% ist.

3. Zusammensetzung gemäß Anspruch 1 oder 2, worin das Fluorpolymer ein binäres oder multinäres Copolymer ist, das die Säure/Säuresalz-Fluorvinylethereinheit und eine von einem ethylenischen Monomer abgeleitete ethylenische Monomereinheit umfasst.

4. Zusammensetzung gemäß Anspruch 3, worin das ethylenische Monomer Tetrafluorethylen ist.

5. Zusammensetzung gemäß irgendeinem der Ansprüche 1 bis 4, worin Y¹ -CF₃ ist, Y² F ist, n 0 oder 1 ist und m 2 ist.

6. Zusammensetzung gemäß Anspruch 5, worin n 0 ist.

7. Zusammensetzung gemäß irgendeinem der Ansprüche 1 bis 6, worin der Gehalt des Fluorpolymers 1 bis 60 Gew.% ist.

8. Zusammensetzung gemäß irgendeinem der Ansprüche 1 bis 7, worin das Fluorpolymer erhältlich ist durch Hydrolysebehandlung einer Emulsionspolymerdispersion, die erhältlich ist durch Emulsionspolymerisation eines Fluorvinyletherderivats der Formel (II):
CF₂=CF-O-(CF₂CFY¹-O)ₙ-(CFY²)ₘ-A² (II)
worin Y¹, Y², n und m wie in Anspruch 1 für Formel (I) definiert sind, und A² -SO₂X² oder -COZ² ist, worin X₂ Halogen ist und Z² C₁₋₄-Alkoxy ist.

9. Zusammensetzung gemäß irgendeinem der Ansprüche 1 bis 8, worin mindestens 50 Gew.% der Fluorpolymerfeinpartikel im wesentlichen sphärisch sind.

10. Zusammensetzung gemäß irgendeinem der Ansprüche 1 bis 9, worin die sphärischen Fluorpolymerfeinpartikel einen mittleren Partikeldurchmesser von ≥ 10 nm aufweisen.

11. Zusammensetzung gemäß irgendeinem der Ansprüche 1 bis 10, die erhältlich ist durch Vereinigen des filmbildenden Hilfsmittels mit einer Dispersion, die die Fluorpolymerfeinpartikel in einem wässrigen Dispersionsmedium dispergiert umfasst.

12. Zusammensetzung gemäß Anspruch 11, worin die Menge des filmbildenden Hilfsmittels bezogen auf die Gesamtmenge des filmbildenden Hilfsmittels und des wässrigen Dispersionsmediums 10 bis 99 Gew.% ist.

13. Zusammensetzung gemäß irgendeinem der Ansprüche 1 bis 12, die weiterhin einen niedrigen Alkohol umfasst.

14. Zusammensetzung gemäß Anspruch 13, worin die Menge des niedrigen Alkohols bezogen auf das Fluorpolymer 0,5 bis 5 Gew.% ist.

15. Zusammensetzung gemäß irgendeinem der Ansprüche 1 bis 10, die ein Organosol ist, das die Fluorpolymerfeinpartikel dispergiert in einem organischen Medium umfasst, welches das filmbildende Hilfsmittel und wahlweise ≤ 10 Gew.% Wasser umfasst, bezogen auf das organische Medium.

16. Zusammensetzung gemäß Anspruch 15, worin das organische Medium weiterhin einen niedrigen Alkohol umfasst.

17. Zusammensetzung gemäß Anspruch 16, worin die Menge des niedrigen Alkohols, bezogen auf das Fluorpolymer, 0,5 bis 5 Gew.% ist.

18. Verfahren zur Herstellung der Zusammensetzung gemäß irgendeinem der Ansprüche 15 bis 17, welches Vereinigen eines filmbildenden Hilfsmittels mit einer Dispersion umfasst, die die Fluorpolymerfeinpartikel dispergiert in einem wässrigen Dispersionsmedium umfasst, gefolgt von Wasserverdampfung.

19. Film/Membran, der/die erhältlich ist durch Filmbildungsgießen unter Verwendung der Zusammensetzung gemäß irgendeinem der Ansprüche 1 bis 17.

20. Film/Membran, der/die erhältlich ist durch Imprägnieren eines porösen Trägers mit der Zusammensetzung gemäß irgendeinem der Ansprüche 1 bis 17, gefolgt von Entfernen des flüssigen Mediums.

21. Aktivsubstanz-immobilisiertes Material, das erhältlich ist durch Anwenden einer flüssigen Zusammensetzung, die eine aktive Substanz und die Zusammensetzung gemäß irgendeinem der Ansprüche 1 bis 17 umfasst, auf einem Substrat.

22. Elektrolytmembran, die das Aktivsubstanz-immobilisierte Material gemäß Anspruch 21 umfasst.

23. Membran-/Elektrodenanordnung, die die Elektrolytmembran gemäß Anspruch 22 umfasst.

24. Feste Polymerelektrolyt-Brennstoffzelle, die den Film/die Membran gemäß Anspruch 19 oder 20, das Aktivsubstanz-immobilisierte Material gemäß Anspruch 21, die Elektrolytmembran gemäß Anspruch 22 und/oder die Membran-/die Elektrodenanordnung gemäß Anspruch 23 umfasst.

## Revendications

1. Composition, qui est une composition de dispersion liquide d'un polymère fluoré comprenant:
1) de fines particules de polymère fluoré, dont au moins 25 % en masse sont essentiellement sphériques, et qui comprennent un polymère fluoré comprenant une unité éther de fluorovinyle d'un acide/sel d'acide de formule (I): 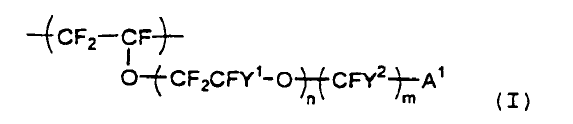 où:
les Y¹ sont chacun individuellement halogène ou perfluoroalkyle,
n est un entier de 0-3,
les Y² sont chacun individuellement un halogène;
m est un entier de 1-5; et
A¹ est -SO₂X¹ ou -COOZ¹, où
X¹ est -OH, -ONR¹R²R³, -NR⁵R⁶ ou -OM¹_{1/L}, R¹, R², R³ et R⁴ étant chacun individuellement H ou alkyle en C₁-C₄, et R⁵ et R⁶ étant chacun individuellement H, un métal alcalin, un alkyle ou un groupe contenant un sulfonyle; et
Z¹ est H, -NR⁷R⁸R⁹R¹⁰ ou -M²_{1/L}, R⁷, R⁸, R⁹ et R¹⁰ étant chacun
individuellement H ou alkyle en C₁-C₄, et M¹ et M² étant chacun un métal qui a une valence de L et qui est choisi dans les groupes 1, 2, 4, 8, 11, 12 et 13 du tableau périodique; et
ii) en tant qu'auxiliaire filmogène, un ester d'acide phosphorique qui est compatible avec l'eau et a un point d'ébullition de plus de 100°C à 300°C.

2. Composition selon la revendication 1, dans laquelle la quantité d'auxiliaire filmogène est de 0,1-100 % en masse par rapport au polymère fluoré.

3. Composition selon la revendication 1 ou 2, dans laquelle le polymère fluoré est un copolymère binaire ou multinaire comprenant l'unité d'éther de fluorovinyle d'acide/sel d'acide et une unité monomère éthylénique dérivée d'un monomère éthylénique.

4. Composition selon la revendication 3, dans laquelle le monomère éthylénique est le tétrafluoroéthylène.

5. Composition selon l'une quelconque des revendications 1-4. dans laquelle Y¹ est -CF₃, Y² est F, n est 0 ou 1 et m est 2.

6. Composition selon la revendication 5, dans laquelle n est 0.

7. Composition selon l'une quelconque des revendications 1-6, dans laquelle la teneur en polymère fluoré est de 1-60 % en masse.

8. Composition selon l'une quelconque des revendications 1-7, où le polymère fluoré est obtenu par traitement d'hydrolyse d'une dispersion de polymère en émulsion obtenue par polymérisation en émulsion d'un dérivé d'éther de fluorovinyle de formule (II):
CF₂=CF-O-(CF₂CFY¹-O)ₙ-(CFY²)ₘ-A² (II)
où Y¹, Y², n et m sont les mêmes que ceux définis dans la revendication 1 pour la formule (I), et A² est -SO₂X² ou -COZ² où X² est un halogène et Z² est un alcoxy en C₁-C₄.

9. Composition selon l'une quelconque des revendications 1-8, dans laquelle au moins 50 % en masse des fines particules de polymère fluoré sont essentiellement sphériques.

10. Composition selon l'une quelconque des revendications 1-9, dans laquelle les fines particules sphériques de polymère fluoré ont un diamètre de particule moyen ≥ 10 nm.

11. Composition selon l'une quelconque des revendications 1-10, qui est obtenue par incorporation de l'auxiliaire filmogène dans une dispersion comprenant les fines particules de polymère fluoré dans un milieu de dispersion aqueux.

12. Composition selon la revendication 11, dans laquelle la quantité d'auxiliaire filmogène est de 10-99 % en masse par rapport à la quantité totale de l'auxiliaire filmogène et du milieu de dispersion aqueux.

13. Composition selon l'une quelconque des revendications 1-12, qui comprend en outre un alcool inférieur.

14. Composition selon la revendication 13, dans laquelle la quantité d'alcool inférieur est de 0,5-5 % en masse par rapport au polymère fluoré.

15. Composition selon l'une quelconque des revendications 1-10, qui est un organosol comprenant les fines particules de polymère fluoré dispersées dans un milieu organique comprenant l'auxiliaire filmogène et éventuellement ≤ 10 % en masse d'eau par rapport au milieu organique.

16. Composition selon la revendication 15, dans laquelle le milieu organique comprend en outre un alcool inférieur.

17. Composition selon la revendication 16, dans laquelle la quantité d'alcool inférieur est de 0,5-5 % en masse par rapport au polymère fluoré.

18. Procédé de production de la composition selon l'une quelconque des revendications 15-17, qui comprend l'incorporation d'un auxiliaire filmogène dans une dispersion comprenant les fines particules de polymère fluoré dispersées dans un milieu de dispersion aqueux, suivie de l'évaporation de l'eau.

19. Film/membrane pouvant être obtenu(e) par formation d'un film par coulée avec la composition selon l'une quelconque des revendications 1-17.

20. Film/membrane pouvant être obtenu(e) par imprégnation d'un support poreux avec la composition selon l'une quelconque des revendications 1-17, suivie de l'évaporation du milieu liquide.

21. Matériau à substance active immobilisée, qui peut être obtenu par application d'une composition liquide comprenant une substance active et la composition selon l'une quelconque des revendications 1-17 sur un substrat.

22. Membrane d'électrolyte comprenant le matériau à substance active immobilisée de la revendication 21.

23. Assemblage membrane/électrode comprenant la membrane d'électrolyte selon la revendication 22.

24. Pile à combustible à électrolyte polymère solide comprenant le film/membrane selon la revendication 19 ou 20, le matériau à substance active immobilisée selon la revendication 21, la membrane d'électrolyte selon la revendication 22 et/ou l'assemblage membrane/électrode selon la revendication 23.
